# EUROPEAN PATENT APPLICATION

(11) **EP 2 418 891 A1**
(43) Date of publication of application: **15.02.2012**
(21) Application number: 10251439.5
(22) Date of filing: 12.08.2010
(51) Int. Cl.: H04W 24/10, H04W 24/02, H04W 84/12, H04L 12/28, H04W 84/04

(54) **Monitoring connection conditions of a plurality of communication technologies in the vicinity of a home gateway**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A system for assisting the installation of a communications service at a customer premises (9), particularly in a domestic setting, provides a client application (14) in a home gateway device (1) such as a wireless router (1) which monitors interference (2), congestion, and other conditions in one or more candidate local communication technologies such as wireless (WLAN), Ethernet or powerline. When a customer requests a new communications service at his premises, requiring hardware such as a broadband media terminal (7) to communicate with the gateway device (1), a remote server application (4) operated by the provider of the proposed service uses the client application (14) to assess which communication technology is most appropriate for the service to be installed at the customer premises (9). A handset (8) associated with the router (1) may be used to analyse the suitability of wireless communication between the router (1) and the proposed location of the new hardware (7).

## Description

This invention relates to a system for assisting the installation of a communications service to a customer, particularly in a domestic setting. In particular, there are several ways in which various communications devices can be arranged to communicate with each other within a home network, such as wireless, Ethernet, and power line connection. The Ethernet connection is a fixed wire line which is the most reliable and most secure, but can be inconvenient if devices are required to be used a long way apart, or to be mobile. A wireless connection is more versatile, but may not work reliably in the presence of interference or congestion, or if the devices which are to communicate are out of range of each other. Powerline connections can be used in some circumstances but are reliant on the availability of an otherwise unused power outlet at each required location.

When a customer requests a new communications service, such as a home networking capability, it is desirable that the service provider can assess which technology is most appropriate for the service to be installed at the customer premises. A service provider may prefer to recommend Ethernet in order to have the greatest certainty that the system will work, but this may result in an inconvenient or impractical set-up for the user, which may in some cases deter the user from installing the service at all. Alternatively, a service provider may offer a wireless connection as being more attractive to the user, resulting in inconvenience if the connection proves unreliable and has to be replaced with something more reliable.

Many internet "home gateways" or "routers" are provided with an associated "internet telephone" - a wireless telephone handset which connects, through a wireless connection, e.g. "Wireless LAN" (WiFi) or DECT, to the home gateway, with the core telephone network through the packet-switched "Internet" instead of through the conventional circuit-switched "POTS" (plain old telephone system). As with conventional cordless handsets, such a device is generally kept attached to its base station (the home gateway device) when not in use, as the home gateway device also acts as a battery charger. If a user tries to use such a device in an area where wireless reception from the base station is poor, he can readily move to another location.

Such an outcome is less practical for an installation such as a computer work station, or a broadband media terminal. Home users often wish to install communications equipment in different locations around the house. For example, if a user wishes to subscribe to an Internet television service, he needs to install a device that connects a television set to the home gateway to convert a signal from the home gateway into content for display on the television screen (a so-called "set top box", although the narrow profile of modern flat-screen TV sets necessitates that in modern practice such devices are usually installed below the TV set itself). A TV set may also have such functionality installed as an integral part of the set. He may wish to install this device in a different room from that in which the internet home gateway is installed, for example because the home gateway has to be in the same room as the network termination socket, and/or a general purpose computer which is required to have a hard-wired Ethernet connection to the home gateway for additional data security. A user may be limited in his choice of where to install such a device, and would not want to find, after he has subscribed to a service and installed the equipment, that it cannot be used in the way he intended.

The connection to a set top box needs to be reliable and have good bandwidth in order to provide a good user experience. Operators have tended not to recommend 2.4GHz WLAN for such services because in a significant number of homes WLAN or RF interference will mean that the WLAN link to the STB is unreliable. High frequency (5GHz) WLAN systems have been used by some operators but this is very expensive, and may not overcome all interference problems.

Service providers therefore generally recommend the use of wired Ethernet or powerline connections for such devices, to ensure the connection will be adequate. However, although Ethernet is very reliable, it is complex to install. Powerline is almost as reliable, and is easy to install provided spare power sockets are available, but it is expensive and has relatively high power consumption. In some circumstances the domestic power supply may be unsuitable for such use, for example because of high impedances in the system, other data already being carried or other factors. In general, it is currently preferred to use WLAN connections for home broadband/internet connections where it is possible to do so. It is the object of the present invention to provide a method of determining whether a particular communications technology is indeed suitable in a given situation.

According to the present invention, there is provided a process for reporting, to a service provisioning system, connectivity conditions in the vicinity of a communications base station, comprising the steps of providing a service management client application associated with the base station, providing a monitoring system for monitoring connection conditions in the vicinity of the base station, and wherein the client application measures the connection conditions and reports the measured conditions to a service management server application remote from the client application.

The invention also provides a communications base station, comprising a monitoring system for monitoring connection conditions in the vicinity of the base station, and a service management client application for reporting the measured conditions to a service management server application remote from the client application.

In a further, complementary aspect, the invention provides a service provisioning system, comprising a service management server application for co-operative operation with a remote client application associated with a communications base station, information processing means for retrieving data from the client application relating to interference conditions in the vicinity of the base station, and identifying a service delivery mode suitable for delivery of a specified service in the reported interference conditions.

The invention allows a service provider, through the server application, to identify whether the local communications environment is suitable for a particular communications technology to be used for the proposed connection.

In a preferred embodiment the process measures conditions in the wireless environment. The monitoring system may comprise a moveable wireless device capable of measuring the quality of the wireless environment traffic between the moveable wireless device and the wireless base station, and which reports measurements to the service management client application. The portable wireless device may be an Internet-enabled handset associated with the wireless base station. This may be a telephone handset and capable of taking and reposting such measurements whilst a speech call is in progress.

The same principle may also be applied to assess the capability of a connection to an electricity supply network for its suitability for communications purposes.

The monitoring system may comprise an interference monitoring unit associated with the base station for detecting the presence of interference sources which may interfere with communication between the base station and the device which it is proposed to install. The monitoring system may operate continuously, so as to detect intermittent interference sources or other time-variant phenomena, and records measurements of interference taken over a predetermined period for subsequent retrieval.

The client application can be installed in the base station, or in an associated handset, in the form of firmware or an after-market software application.

The monitoring system may take various forms. Two such systems are described below, but it should be understood that the process may use either or both methods to monitor the wireless environment.

The monitoring system may comprise an interference monitoring unit associated with the wireless base station for detecting the presence of interference sources which may interfere with communication between the base station and the device which it is proposed to install. Such a monitoring system may operate continuously, so as to detect intermittent interference sources or other time-variant phenomena, so as to be able to report more than an instantaneous value to the server application when required.

The monitoring system may also comprise a moveable wireless device capable of measuring the quality of signal traffic between the moveable wireless device and the wireless base station. The moveable wireless searching device can therefore be used to search the customer premises to determine where in the premises an acceptable wireless signal can be detected, and therefore whether a wireless connection can be established for the desired service, before the service is set up and the requisite hardware installed. Any portable wireless device capable of detection by the base station may be used as the searching device, but in a preferred embodiment, the moveable wireless searching device is an Internet telephone or other cordless handset associated with the wireless base station. This is convenient because the handset is typically supplied with the base station, and is able to communicate with it, with no additional configuration operations required of the user. The network service provider will also be aware of the capabilities of the handset and thus have a benchmark against which to compare the performance with that required for the planned service. The handset is also readily portable, allowing a user to explore various possible locations for the new equipment. Moreover, if the user is using the handset to discuss the installation of the service with an operative at a remote call centre, he does not need to carry and operate a second device to perform the search.

The monitoring system may include means for generating test signals to determine properties such as reliability, channel quality, bit error rate, latency and throughput capacity. Such tests may involve test signals transmitted from the base station to the handset, and/or vice versa.

Two embodiments of the invention will now be described, by way of example, with reference to the drawings in which:
Figure 1 is a schematic depiction of the various elements which cooperate in the performance of the invention in a first embodiment, and
Figure 2 is a schematic depiction of the various elements which cooperate in the performance of the invention in a second embodiment
Figure 3 is a flow chart illustrating a service ordering process including the technical steps comprising the invention.

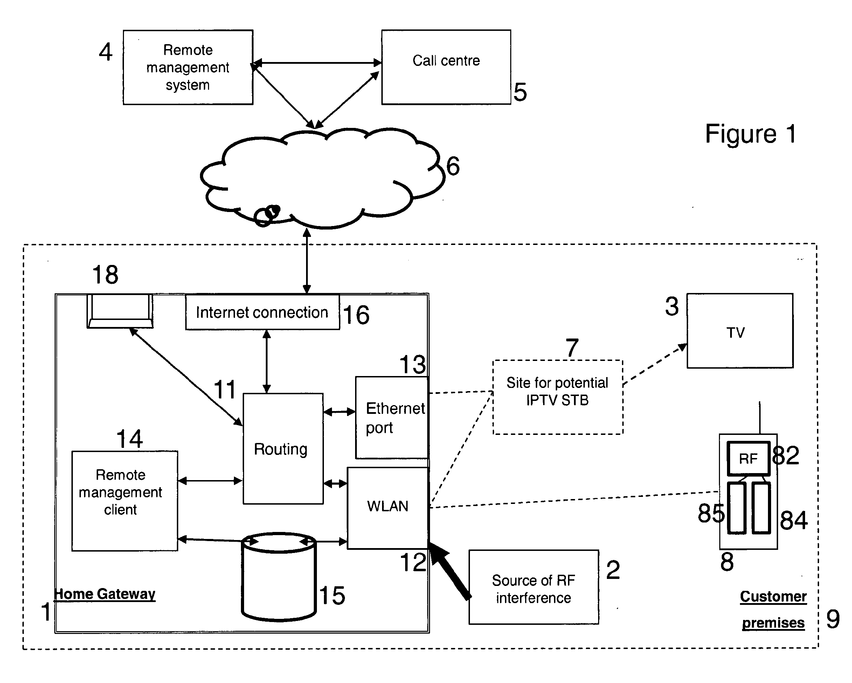

Figure 1 shows a wireless base station, depicted as a broadband home gateway 1, installed at a customer's premises 9, and connected over a data communications system such as the "Internet" 6 to a remote management system 4 associated with a call centre 5. The home gateway 1 has a wireless interface 12 for wireless communication with one or more wireless devices 7, 8. Such wireless devices may include an internet-enabled wireless telephone handset 8, or handheld computer device. When not in use, the handset 8 is kept in a docking station 18 which provides an electrical charging capability and also registers its presence to the home gateway. The home gateway 1 also includes an Ethernet port 13 to allow devices to be connected by way of a direct wired connection or via a powerline connection.

The home gateway 1 also includes a router 11 for switching communications traffic between the WLAN connection 12, the Ethernet port 13, and an external connection 16, thereby providing connectivity between devices 7, 8 connected to the home gateway 1 and an external communications network such as the "internet" 6.

The home gateway 1 also has a remote management client agent 14 for communicating over the internet connection 6 with the remote management system 4.

The wireless interface 12 continuously monitors the local wireless environment for sources 2 of interference, and reports the results to a data store 15 which maintains a record of the environment, such that information on the environment may be retrieved by the remote management client 14 as required. An operative at the call centre 5 can use the remote management server 4 to retrieve this data as required, using the remote management client 14, to examine the locally-collected WLAN and RF information. This allows the operative 5 to assess the suitability of the user environment for wireless operation of a desired service.

This arrangement allows the network operator or service provider 5 to remotely collect locally generated WLAN and RF interference data from the home gateway 1 and use it to judge whether or not a wireless solution could be used in the home to connect between the home gateway 1 and a wireless-enabled set top box or media device 7.

Information previously collected by the store 15, can be retrieved by the remote management client 14, under the command of the remote management server 4, to provide an indication of wireless activity in the customer's home environment 9. Such information can include data on interference from external sources 2, including historical data on how often such interference is at unacceptable levels. It may also record the level of use of the wireless network controlled by the home gateway 1, as heavy use by other users (for example frequent high-bandwidth downloads) may affect the performance of a further newly-added high-bandwidth item 7.

This information provides an indication of the environment in the vicinity of the home gateway 1, and will determine how well the home gateway would manage an extra device 7. In addition, a portable wireless device 8 can be used to determine whether a suitable location exists for installation of the set top box 7. Any portable device having a wireless connection to the home gateway 1 may be used for this purpose, but in a preferred embodiment a WLAN enabled telephone or tablet handset 8 is used. The handset 8 can be supplied with the home gateway 1, and the remote management system 4 is configured to cause the remote management client 14 to report connectivity information relating to the associated handset 8 as the user moves around the premises, ideally even as the user uses the handset 8 to speak to an operative at the call centre 5.

The monitoring of the wireless link between the home gateway 1 and handset 8 may be performed autonomously by the home gateway 1, but as shown in Figure 1, the handset itself is configured with the capability to report on the RF environment in its vicinity. Thus the RF environment in the vicinity of the RF interface 82 of the handset 8 is monitored by monitoring function 85 enabled by a sub-client 84 controlled by the remote management client 14 (by way of the WLAN connection 12/82), and reports its measurements back to the remote management client 14.

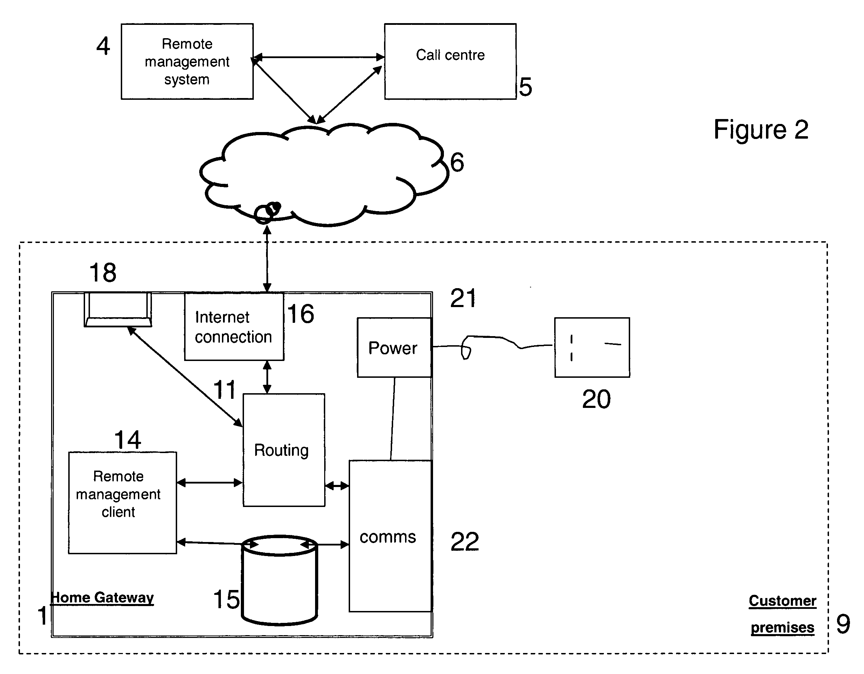

Figure 2 illustrates a variant embodiment for determining the suitability of the domestic power supply for powerline connections. In this embodiment the WLAN connection 12 of Figure 1 is replaced by a power connection comprising a connector 20, a power management unit 21 and a communications unit 22. (It should be understood that the embodiment of Figure 1 will also typically include a power connection and power management unit, but these play no direct part in the communications process. Moreover, embodiments are envisaged which include the capabilities of the embodiments of Figures 1 and 2, to analyse both wireless and powerline connections, and possibly others such as Ethernet)

The power management system 20 distributes electrical power at the required voltages to the various components of the gateway 1, and also includes a communications processor 22 having a data input/output function for identifying data transmitted as a modulation over the power supply network. Such data is routed to and from the router 11.

In use, and in response to a prompt from the remote management system 4, the client 14 monitors the power supply through the communications processor 22 to detect potential sources of interference for a potential power line connection. Data may also be collected continuously by the communications processor 22 for storage in the store 15 and subsequent retrieval.

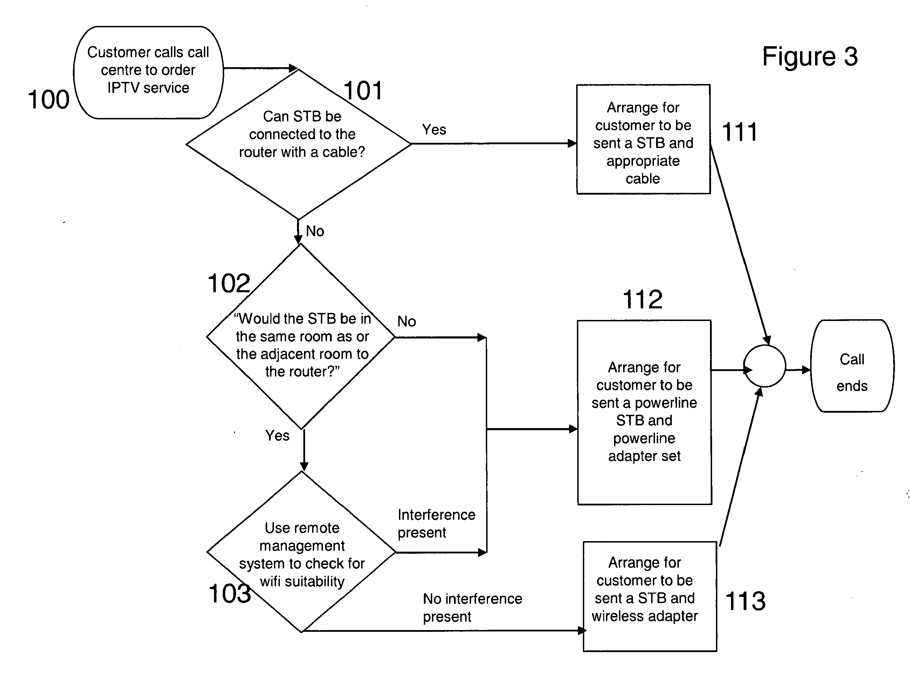

The process of ordering a new internet-based service is shown in Figure 3. This is described with reference to the embodiment of Figure 1, but it will be apparent to the person skilled in the art how the process may be varied for the embodiment of Figure 2.

The customer initially uses the handset 14 to make a call through the internet connection 6 to the call centre 5 (step 100). The operative at the call centre takes the customer through a number of steps to determine what type of connection is most appropriate. For example, if the location of the user's TV set 3 (and therefore also the proposed location of the STB 13) is in close proximity to the home gateway 1 (101) the simplest and most reliable connection is through a short Ethernet cable, and the operative can set up an order for delivery accordingly (step 111). Similarly, if the STB 3 and home gateway 1 are to be a long way apart (102), for example on different storeys of a building, powerline connection is likely to be the preferred solution (112). Powerline connection is normally made through the same Ethernet ports in the home gateway 1 and STB 7, but for an intermediate part of the routing the signals are modulated over the domestic electric house wiring. In the embodiment of Figure 2, a powerline adapter 22 is integrated into the gateway device.

If it is likely that wireless is a potential solution, the call centre operative 5 uses the remote management system 4, 14 to determine whether the wireless environment is indeed suitable (step 103). This retrieves data from the store 15 rotating to potential interference or capacity problems. The caller is also requested to move around the premises 9, with the handset 8, to the proposed location of the STB 7 so that the handset 8 can report to the remote management agent 14 on the wireless conditions at that location. The connectivity information for specified relative positions of the home gateway 1 and the television set 3 to which the STB 7 is to be connected enable a reliable judgement to be made as to whether or not a wireless connection could be used.

When a new service is ordered by the customer requiring connection of a set top box 7 to an existing home gateway 1, the service provider can use the information previously collected to determine whether to supply the potential customer with a wireless adapter for use with the STB 7 (step 113). Alternatively, if the existing wireless environment will not be sufficient, an alternative technology can be supplied such as powerline (step 112) or Ethernet cable (111), thus ensuring an increased chance of the customer managing to establish a good connection to the STB 13 when it is delivered. Another possible option for delivery of the service may be to provide an upgraded STB, including the ability to connect wirelessly.

Using the embodiment of Figure 2, an operative can, in a similar way, assess the suitability of the local domestic power supply for a powerline connection. In this case measurement can be readily made at an electrical socket close to the gateway device. If it is desired to measure the quality of connection between that socket and one close to the intended location of the STB, a beacon device for plugging into the supply at the remote location, may be supplied for use as a probe in a similar way to the handset 8 in Figure 1.

Using this information, the operative at the call centre 5 can therefore determine which solution (111, 112, 113) is most expedient, and order the appropriate equipment for delivery to the customer.

If the handset and/or the base station have a position-finding capability e.g. GPS, the location of the device can also be supplied to the operator as this may also provide useful data for example on potential interference from neighbouring devices, or data may be obtained from a first gateway close to a proposed new location for a second gateway, for example when the owner of the second gateway is planning to move premises.

The operator may also use data collected from neighbouring gateways, either previously archived or polled at the time of the enquiry relating to the newly-proposed installation, in making this decision. For example it may be used to identify whether the proposed new gateway has the potential for interference with such neighbouring gateways.

## Claims

1. A process for reporting, to a service provisioning system, connectivity conditions in the vicinity of a communications base station, comprising the steps of providing a service management client application associated with the base station, providing a monitoring system for monitoring connection conditions in the vicinity of the base station, and wherein the client application measures the connection conditions and reports the measured conditions to a service management server application remote from the client application.

2. A process according to claim 1, for measuring conditions in the wireless environment

3. A process according to claim 2, wherein the monitoring system comprises a moveable wireless device capable of measuring the quality of signal traffic between the moveable wireless device and the wireless base station, and which reports measurements to the service management client application.

4. A process according to claim 1, wherein the base station has a connection to an electricity supply network and monitors the electrical environment in the electricity supply network for its suitability for communications purposes.

5. A process according to any preceding claim, wherein the monitoring system comprises an interference monitoring unit associated with the base station for detecting the presence of interference sources which may interfere with communication between the base station and a device which it is proposed to install for communication with the base station.

6. A process according to claim 5, in which the monitoring system operates continuously, so as to detect intermittent interference sources or other time-variant phenomena, and records measurements of interference taken over a predetermined period for subsequent retrieval.

7. A communications base station, comprising a monitoring system for monitoring connection conditions in the vicinity of the base station, and a service management client application for reporting the measured conditions to a service management server application remote from the client application.

8. A base station according to claim 7, wherein the monitoring system measures conditions in the wireless environment

9. A base station according to claim 8, in combination with an associated moveable wireless device capable of measuring the quality of signal traffic between the moveable wireless device and the wireless base station, and reporting such measurements to the service management client application.

10. The combination of claim 9, wherein the portable wireless device is an Internet-enabled handset associated with the wireless base station.

11. The combination of claim 10, wherein the handset is a telephone handset and is capable of taking and reposting such measurements whilst a speech call is in progress

12. A base station according to claim 7, having a connection to an electricity supply network, wherein the monitoring means monitors the electrical environment in the electricity supply network for its suitability for communications purposes.

13. A base station according to any of claims 7 to 12, wherein the monitoring system comprises an interference monitoring unit for detecting the presence of interference sources which may interfere with communication between the base station and a further device.

14. A base station according to claim 13, in which the monitoring system operates continuously, so as to detect intermittent interference sources or other time-variant phenomena, and records measurements of interference taken over a predetermined period for subsequent retrieval.

15. A service provisioning system, comprising a service management server application for co-operative operation with a remote client application associated with a communications base station, information processing means for retrieving data from the client application relating to interference conditions in the vicinity of the base station, and identifying a service delivery mode suitable for delivery of a specified service in the reported interference conditions.
